# EUROPEAN PATENT APPLICATION

(11) **EP 4 836 436 A1**
(43) Date of publication of application: **04.11.2026**
(21) Application number: 25173001.6
(22) Date of filing: 28.04.2025
(51) Int. Cl.: H04N 25/47, H04N 25/00, H04N 25/77, H04N 25/707, H04N 25/78, H04N 25/618, H04N 25/60, H04N 25/50, H04N 25/772, G06T 7/20, G06V 10/10

(54) **EVENT SENSOR**

(71) Applicant: IniVation AG, 8050 Zürich (CH)
(72) Inventor: Li, Chenghan, 8051 ZÜRICH (CH)
(74) Representative: Adares PartGmbB

(57) **Abstract**

The invention relates to an event sensor comprising a pixel array (10) of pixels and configured to produce a data stream of event data in reaction to light incident on the pixel array (10), wherein the pixels of the pixel array (10) are divided into pixel blocks. The event sensor comprises for each pixel at least one photodetector (1) for producing a detector signal, for each pixel or a group of the pixels a signal converter (2) for sampling the detector signal and producing a sample value, and a readout processor (4) for performing a processing iteration on the pixel block to produce the event data. The readout processor (4) comprises a pixel value module (41) for deriving a pixel value based on the sample value, a vector module (42) for determining a block vector based on the pixel values of the pixel block, a transformation module (43) for performing a linear transformation on the block vector to obtain transformation coefficients, a thresholding module (44) for thresholding the transformation coefficients to obtain thresholded transformation coefficients, and an event generation module (45) for producing the event data based on the thresholded transformation coefficients.

## Description

The invention relates to an event sensor for producing a data stream of event data in reaction to light incident on a pixel array.

In some machine vision tasks, such as tracking, localization and detection of moving objects, it is desirable for the machine vision algorithm to receive an input with a high temporal resolution and a minimum latency. For such machine vision tasks, it is also undesirable to receive and process a large amount of redundant or irrelevant information. Therefore, such machine vision tasks demand a smart vision sensor that has a high temporal resolution, a low latency, and a low data redundancy.

Prior art US 7,728,269 B2 proposed an event sensor design, which encodes temporal contrasts of the scene, thereby produces activity-driven output data in the format of polarity events. This design aims to reduce output data, i.e. number of events produced, by removing temporal redundancy. However, there are three common causes that can lead to excessive output data produced by such an event vision sensor:
The first cause is motion. When there is a relative movement between the prior art event sensor and the scene or part of the scene, the prior art event sensor would produce events from all pixels that perceive any moving spatial features.
The second cause is spatial redundancy. When there is a change in illumination on the scene or part of the scene, the prior art event sensor would produce events from all pixels that perceive the change in illumination.
The third cause is noise. Various noises inherently exist in all vision sensors. The prior art event sensor would perceive all noises exceeding an event threshold as temporal contrasts and produce events.

EP 4 415 375 A1 proposed an improved event sensor design, which detects a motion vector and a mode (i.e. most frequent) temporal change value for each pixel block and produces events based on the motion vector, the mode temporal change value and possible outlier temporal change values. This design aims to address the aforementioned first and second causes of excessive output data, however, still does not address the third cause, namely noise. Furthermore, noise also makes finding the mode temporal change value of a pixel block less effective because the temporal change values of different pixels are likely to differ due to noise even if the pixels have captured the same illumination change.

The objective of the present invention is to address the second cause more effectively and address the third cause at the same time, namely, to lower or minimize producing excessive output data due to spatial redundancy and noise.

This objective is achieved according to the present invention by providing an event sensor with the features of claim 1. Further advantageous embodiments of the invention are subjects of the sub-claims.

The key innovation of the present invention is the utilization of linear transformation and subsequent thresholding in an event sensor to minimize spatial redundancy and noise in its output event data.

The present invention is based on an event sensor architecture as described in EP 4 415 375 A1. The event sensor comprises a pixel array of pixels and is configured to produce a data stream of event data in reaction to light incident on the pixel array. The pixels of the pixel array are divided into pixel blocks, each pixel block comprising two or more pixels of the pixel array. It shall be noted that the pixel block may contain one single row or column of the pixels; or the pixel block may contain two or more rows and columns of the pixels. The event sensor comprises for each pixel of the pixel array at least one photodetector configured to produce a detector signal in reaction to light incident on the pixel. The detector signal is an analog signal. The photodetector may be a photodiode, in particular a pinned photodiode (PPD). Advantageously, the photodetector may be configured to execute an exposure of a programmable exposure duration, wherein each pixel or a group of the pixels is associated with one programmable exposure duration. This feature is known to enable various known exposure control functionalities such as autoexposure, coded exposure, exposure bracketing and local exposure control.

The event sensor further comprises for each pixel or a group of the pixels a signal converter connected to the photodetector and configured to sample the detector signal and produce a sample value dependent on the detector signal sampled at sampling intervals. The sample value is a digital, i.e. binary or base-two, value. The sample value may in particular be linearly dependent on, or proportional to, the detector signal. The signal converter may comprise at least one analog amplifier that is configured to amplify the detector signal and convey an amplified detector signal, and one analog-to-digital converter that is configured to convert the amplified detector signal to the sample value. Advantageously, the signal converter, in particular the analog amplifier, may further implement a programmable gain.

Furthermore, the event sensor comprises a readout processor that is connected to the signal converter and is configured to receive the sample value from the signal converter, and upon receiving all the sample values of the pixel block, perform a processing iteration on the pixel block to produce the event data. For accomplishing the processing iteration, the readout processor comprises a number of modules. In other words, the processing iteration consists of collaborative operations of the modules of the readout processor. These modules may in particular be implemented as individual circuits, which may share sub-circuit structures or be strictly separated.

The readout processor thus comprises a pixel value module configured to derive for each pixel of the pixel block a pixel value based on the sample value. The pixel value may be directly the sample value. Alternatively, the pixel value may be calculated as an average of multiple sample values, wherein the multiple sample values may be from the same pixel but from multiple sampling intervals, or from the same sampling interval but from multiple pixels near each other, or from multiple pixels near each other and from multiple sampling intervals.

Herein, an average of a set of values refers to a measure of a central tendency of the set of values, which may for example be the mean, the medium or the mode, and may also be another measure that best represents the set of values.

In an advantageous embodiment where the programmable exposure duration is implemented, the pixel value may be calculated as the sample value divided by the programmable exposure duration, or as a weighted average of multiple sample values, wherein the multiple sample values are as described previously, and the weight of each of the multiple sample values is the corresponding programmable exposure duration.

In another advantageous embodiment where the programmable gain is implemented, the pixel value may be calculated as the sample value divided by the programmable gain, or as a weighted average of multiple sample values, wherein the multiple sample values are as described previously, and a weight of each of the multiple sample values is the corresponding programmable gain.

In yet another advantageous embodiment where both the programmable exposure duration and the programmable gain are implemented, the pixel value may be calculated as the sample value divided by a product of the programmable exposure duration and the programmable gain, or as a weighted average of multiple sample values, wherein the multiple sample values are as described previously, and a weight of each of the multiple sample values is a product of the corresponding programmable exposure duration and the corresponding programmable gain.

In a cumulative and advantageous embodiment, the pixel value may be derived based on the sample value corrected by a gain correction and/or compensated by an offset compensation.

The readout processor further comprises a vector module configured to determine a block vector related to the pixel block. The block vector comprises a tuple of elements based on the pixel values of the pixel block.

According to an advantageous embodiment, the vector module is configured to perform a block-matching algorithm on the pixel block to find a matching block, calculate a motion vector and the block vector. The vector module evaluates a similarity between the pixel block and a candidate block within a search window by calculating an evaluation metric based on the pixel values of the pixel block and previous pixel values of the candidate block. Herein, the previous pixel value of the pixel is derived during a previous processing iteration performed on the pixel. The evaluation metric may for example be a sum of absolute differences between the pixel values of the pixel block and the corresponding previous pixel values of the candidate block. Advantageously, the vector module may implement a non-exhaustive search, i.e. without evaluating every candidate within the search window, such as a three-step-search. The vector module then chooses the candidate block that leads to the best evaluation metric among the evaluated candidate blocks, e.g. the lowest sum of absolute differences, as the matching block, then calculates the motion vector as a translational displacement between the pixel block and the matching block, and lastly calculates the block vector as a residual difference between the pixel block and the matching block, comprising pixel-wise differences between the pixel values of the pixel block and the corresponding previous pixel values of the matching block. In other words, regardless of the shape of the pixel block, if the pixel block consists of N pixels, then the block vector is a tuple of N elements, wherein each of the N elements is a difference between one of the pixel values of the pixel block and a corresponding one of the previous pixel values of the matching block.

According to an alternative embodiment, the vector module is configured to calculate the block vector as a temporal difference of the pixel block, comprising pixel-wise differences between the pixel values and the previous pixel values of the pixel block. In other words, regardless of the shape of the pixel block, if the pixel block consists of N pixels, then the block vector is a tuple of N elements, wherein each of the N elements is a difference between the pixel value and the previous pixel value of one of the N pixels.

Herein, each pixel of the pixel block and a corresponding pixel of the candidate block or the matching block are geometrically corresponding to each other. In other words, the pixel of the pixel block and the corresponding pixel of the candidate block or the matching block have the same relative position with reference to the pixel block and the candidate block or the matching block respectively. For example, the pixel of the pixel block may be at the top left corner of the pixel block, in which case the corresponding pixel of the candidate block or the matching block is also at the top left corner of the candidate block or the matching block. Therefore, the pixel value of each pixel of the pixel block, the previous pixel value of the corresponding pixel of the candidate block or the matching block and the element of the block vector that is calculated based on the pixel and the corresponding pixel are said to correspond to each other. Furthermore, the pixel value of each pixel, the previous pixel value of the pixel and the element of the block vector that is calculated based on the pixel are also said to correspond to each other. Lastly, a result of a pixel-wise arithmetic operation involving the pixel values, the previous pixel values and/or the block vector thus refers to a collection of results of such arithmetic operation performed on each individual pixel value, the corresponding previous pixel value and/or the corresponding element of the block vector.

Cumulatively and advantageously, the event sensor may comprise an anchor memory connected to the readout processor and configured to store, for each pixel of the pixel array, the previous pixel value.

According to yet another alternative embodiment, the vector module may be configured to determine the block vector as directly comprising the pixel values of the pixel block.

The readout processor further comprises a transformation module, which is configured to perform a linear transformation on the block vector to obtain transformation coefficients.

Through the linear transformation, the block vector is expressed as a sum of products of the transformation coefficients and corresponding basis vectors. The basis vectors are a linearly independent spanning set of vectors. In other words, through the linear transformation, the block vector is expressed as a linear combination of the basis vectors, as described by the following equation: $V = {\sum }_{i = 0}^{N} {T}_{i} {B}_{i}$ where V is the block vector, *Tᵢ* is one of the transformation coefficients, *Bᵢ* is the corresponding basis vector and N is a count of the elements of the block vector, hence also a count of the basis vectors.

Given the block vector, and any basis vector, the corresponding transformation coefficient measures a similarity between the block vector and the basis vector, and is calculated as a inner product of the block vector and the basis vector, as described by the following equation: ${T}_{i} = \left〈V, {B}_{i}\right〉$

Advantageously, the linear transformation may be Fourier-related, such as a discrete cosine transform, where the basis vectors are sinusoidal-based. Alternatively, the linear transformation may be wavelet-related, such as a Haar transform, where the basis vectors are based on a Haar wavelet. There are other known linear transformation types, such as Walsh-Hadamard transforms and slant transforms. In general, each basis vector and the corresponding transformation coefficient represent a different spatial frequency component. The goal of the linear transformation is to decorrelate the information of the block vector, and to pack as much information as possible into as few transformation coefficients as possible.

The readout processor further comprises a thresholding module configured to perform a thresholding operation on the transformation coefficients using one or more coefficient threshold(s) to obtain thresholded transformation coefficients. In particular, the thresholding operation may be a threshold-to-zero operation. Specifically, if an absolute value of a transformation coefficient is larger than a respective coefficient threshold, then a corresponding thresholded transformation coefficient may equal the transformation coefficient; however, if an absolute value of a transformation coefficient is not larger than a respective coefficient threshold, then a corresponding thresholded transformation coefficient may equal zero. The thresholding operation may be described by the following equation: ${Q}_{i} = \left\{\begin{matrix}{T}_{i} if \left|{T}_{i}\right| > {θ}_{i} \\ 0 otherwise\end{matrix}\right.$ where *θᵢ* is the respective coefficient threshold and *Qᵢ* is the corresponding thresholded transformation coefficient.

Advantageously, the thresholding module may be configured to threshold a transformation coefficient representing a lower spatial frequency component using a lower coefficient threshold than a transformation coefficient representing a higher spatial frequency component. Furthermore, the event sensor may comprise a threshold memory connected to the readout processor and configured to store a predetermined coefficient threshold assigned to each transformation coefficient and/or each group of transformation coefficients.

After the linear transformation, many of the transformation coefficients often contain near zero values, particularly those transformation coefficients representing higher spatial frequency components. This is because typical visual scenes consist of relatively more lower spatial frequency components than higher spatial frequency components. On the other hand, various noises in the event sensor usually contribute to mainly the higher spatial frequency components. Therefore, advantageously, a transformation coefficient representing a lower spatial frequency component may be thresholded using a lower coefficient threshold, hence may be more easily retained by a corresponding thresholded transformation coefficient. Vice versa, a transformation coefficient representing a higher spatial frequency component may be thresholded using a higher coefficient threshold, hence may be less easily retained by a corresponding thresholded transformation coefficient.

According to an advantageous embodiment, where the vector module is configured to perform the block-matching algorithm on the pixel block, the thresholding module may be configured to modulate the thresholding operation based on an average of the pixel values of the pixel block, an average of the previous pixel values of the matching block, or an average of both the pixel values of the pixel block and the previous pixel values of the matching block. Specifically, a higher average may allow the thresholding module to increase the coefficient threshold(s) for some or all of the transformation coefficients, and vice versa, a lower average may allow the thresholding module to decrease the coefficient threshold(s) for some or all of the transformation coefficients. This is because one of the main noise sources of the pixel is the photon shot noise, which increases sub-linearly with the pixel value.

Advantageously, if the programmable exposure duration is implemented, the pixel value and the previous pixel value may both be in a floating-point format, wherein a base and an exponent reflect a reciprocal, i.e. a multiplicative inverse, of the respective programmable exposure duration associated to the pixel value or the previous pixel value. In this case, the average of the pixel values, of the previous pixel values or of both the pixel values and the previous pixel values may refer specifically to an average of respective significands of the pixel values, of the previous pixel values or of both the pixel values and the previous pixel values. This characterization may in particular apply to the embodiments described in the previous and/or the following paragraph.

According to another advantageous embodiment, where the block vector is determined as the temporal difference or as directly comprising the pixel values of the pixel block, the thresholding module may be configured to modulate the thresholding operation based on an average of the pixel values of the pixel block, an average of the previous pixel values of the pixel block, or an average of both the pixel values and the previous pixel values of the pixel block. Specifically, a higher average may allow the thresholding module to increase the coefficient threshold(s) for some or all of the transformation coefficients, and vice versa, a lower average may allow the thresholding module to decrease the coefficient threshold(s) for some or all of the transformation coefficients.

The readout processor further comprises an event generation module configured to produce the event data based on the thresholded transformation coefficients.

According to an advantageous embodiment, where the vector module is configured to perform the block-matching algorithm on the pixel block, the event generation module may produce the event data from the pixel block if the motion vector's magnitude is not zero or any of the thresholded transformation coefficients is/are not zero, i.e. there is/are non-zero thresholded transformation coefficient(s). In other words, the event generation module may not produce the event data from the pixel block if the motion vector's magnitude is zero and all the thresholded transformation coefficients are zero. The produced event data thus contains the motion vector and the non-zero thresholded transformation coefficient(s). In particular, the event data may contain the motion vector, (an) identifier(s) of the non-zero thresholded transformation coefficient(s) and (a) value(s) of the non-zero thresholded transformation coefficient(s).

According to another advantageous embodiment, where the block vector is determined as the temporal difference or as directly comprising the pixel values of the pixel block, the event generation module may produce the event data from the pixel block if any of the thresholded transformation coefficients is/are not zero, i.e. there is/are non-zero thresholded transformation coefficient(s). In other words, the event generation module may not produce the event data from the pixel block if all the thresholded transformation coefficients are zero. The produced event data thus contains the non-zero thresholded transformation coefficient(s). In particular, the event data may contain (an) identifier(s) of the non-zero thresholded transformation coefficient(s) and (a) value(s) of the non-zero thresholded transformation coefficient(s).

Advantageously, the readout processor may further comprise an update module. If the event generation module produces the event data from the pixel block, the update module may be configured to update the previous pixel values of the pixel block stored in the anchor memory based on the event data. In other words, if no event data is produced from the pixel block, then the update module may not update the previous pixel values of the pixel block stored in the anchor memory.

According to an cumulative and advantageous embodiment, where the vector module is configured to perform the block-matching algorithm on the pixel block, if the event generation module produces the event data from the pixel block, the update module may be configured to update, for each pixel of the pixel block, the previous pixel value based on the motion vector and the non-zero thresholded transformation coefficient(s), specifically via the following steps:
i) locate the matching block according to the motion vector;
ii) perform an inverse linear transformation based on the non-zero thresholded transformation coefficients to obtain a reconstructed block vector, i.e. a reconstructed residual difference;
iii) update the previous pixel values of the pixel block in the anchor memory with the pixel-wise sum of the previous pixel values of the matching block and the reconstructed block vector.

According to another cumulative and advantageous embodiment, where the block vector is determined as the temporal difference, if the event generation module produces the event data from the pixel block, the update module is configured to update, for each pixel of the pixel block, the previous pixel value based on the non-zero thresholded transformation coefficient(s), specifically via the following steps:
i) perform an inverse linear transformation based on the non-zero thresholded transformation coefficients to obtain a reconstructed block vector, i.e. a reconstructed temporal difference;
ii) update the previous pixel values of the pixel block in the anchor memory with the pixel-wise sum of the previous pixel values of the pixel block and the reconstructed block vector.

According to yet another cumulative and advantageous embodiment, where the block vector is determined as directly comprising the pixel values of the pixel block, if the event generation module produces the event data from the pixel block, the update module is configured to update, for each pixel of the pixel block, the previous pixel value based on the non-zero thresholded transformation coefficient(s), specifically via the following steps:
i) perform an inverse linear transformation based on the non-zero thresholded transformation coefficients to obtain a reconstructed block vector, i.e. reconstructed pixel values;
ii) update the previous pixel values of the pixel block in the anchor memory with the reconstructed block vector.

According to a further cumulative and advantageous embodiment, the readout processor may be configured to, upon receiving all the sample values of the pixel block, determine whether to perform the processing iteration on the pixel block or not based on (a) comparison result(s) of comparing an average, a minimum and/or a maximum of the sample values of the pixel block against an under-exposure threshold and/or an over-exposure threshold. In particular, if the average or the minimum of the sample values is lower than the under-exposure threshold or if the average or the maximum of the sample values is higher than the over-exposure threshold, then the readout processor may not perform the processing iteration on the pixel block, i.e. the modules of the readout processor may not operate on the pixel block. In other words, the readout processor may only perform the processing iteration on the pixel block, i.e. the modules of the readout processor may only operate on the pixel block, if the average or the minimum of the sample values is higher than the under-exposure threshold and/or if the average or the maximum of the sample values is lower than the over-exposure threshold. This is because if the average, the minimum or the maximum of the sample values exceeds the under-exposure threshold or the over-exposure threshold, then one or more of the sample values is/are not correct anymore. This feature ensures the processing iteration is based on correct sample values and therefore ensures the resulting event data is correct. This feature may in particular be implemented in conjunction with one or several of the exposure control functionalities.

Some examples of embodiments of the present invention will be explained in more detail in the following description with reference to the accompanying schematic drawings, wherein:
- Fig. 1: shows a block diagram of an event sensor architecture according to a preferred embodiment;
- Fig. 2: shows a block diagram of a readout processor according to a preferred embodiment; and
- Fig. 3: shows basis vectors of a linear transformation for a pixel block according to a preferred embodiment.

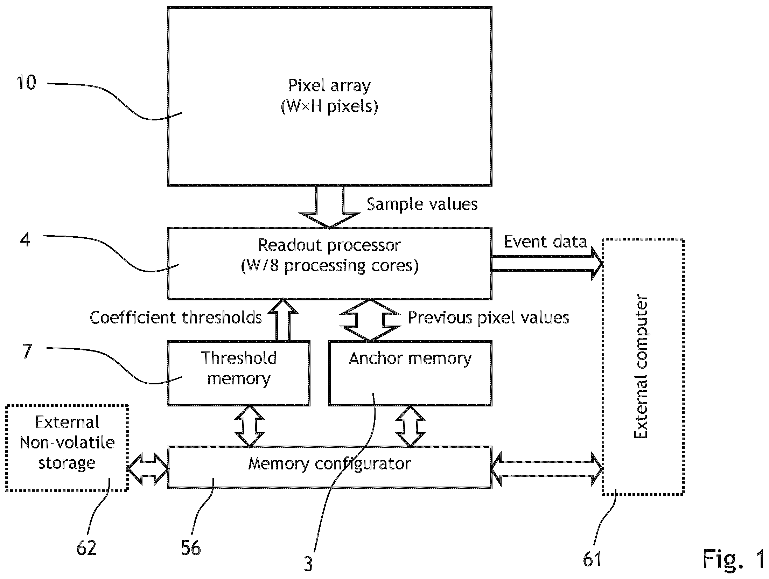

Fig. 1 shows the event sensor architecture according to one advantageous embodiment. The event sensor comprises a two-dimensional pixel array 10 of W columns by H rows of pixels. The pixel array 10 is divided into one eighth of W columns by one eighth of H rows of pixel blocks. Each pixel block therefore consists of eight columns by eight rows of the pixels. Each pixel of the pixel array 10 comprises exactly one photodetector, which is a photodiode. Each column of the pixels, i.e. H rows by one column of the pixels, are connected to a signal converter. The signal converter comprises one half of H analog amplifiers, which are based on an active pixel circuit, and an analog-to-digital converter (ADC). Each signal converter therefore produces sample values for one column of the pixels in a sequential fashion.

The event sensor further comprises a readout processor 4 that consists of one eighth of W columns by one row of processing cores 4. Each processing core 4 is configured to process one column of the pixel blocks in the pixel array 10, one pixel block at a time. All the processing cores 4 can process simultaneously in parallel, so the readout processor 4 can process one row of the pixel blocks simultaneously in parallel at a time.

The event sensor further comprises an anchor memory 3 and a threshold memory. The anchor memory 3 is SRAM-based and stores previous pixel values of the pixel array 10. The threshold memory is based on registers and stores coefficient thresholds. Both the anchor memory 3 and the threshold memory 7 can be loaded from an external non-volatile storage 62, such as a flash memory, and updated by an external computer 61 via a memory configurator 56.

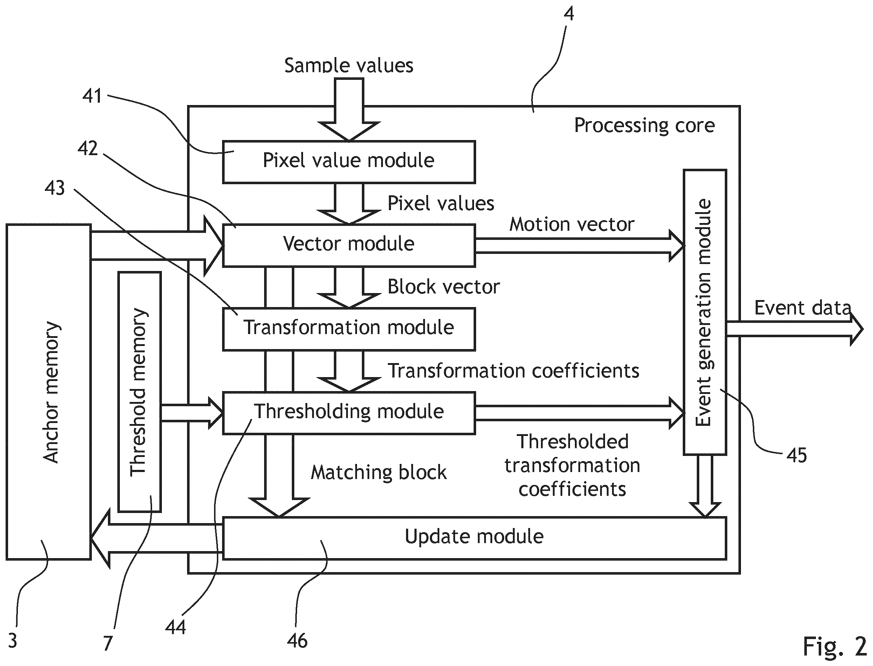

Fig. 2 shows a block diagram of the readout processor 4, in particular one processing core 4, comprising a pixel value module 41, a vector module 42, a transformation module 43, a thresholding module 44, an event generation module 45 and an update module 46.

The readout processor 4 is connected to the signal converters and receives the sample values. Upon receiving all the sample values of one row of the pixel blocks, the readout processor 4 then performs a processing iteration on the row of the pixel blocks. The processing iteration contains the following steps:
Step 1: the pixel value module 41 derives the pixel values as the sample values compensated by an offset compensation;
Step 2: the vector module 42 performs a block matching algorithm on the pixel block to find a matching block, then calculates a motion vector and a block vector, where the block vector is calculated as a residual difference between the pixel block and the matching block;
Step 3: the transformation module 43 performs a Haar transform on the block vector to obtain transformation coefficients;
Step 4: the thresholding module 44 performs a threshold-to-zero operation on the transformation coefficients using the respective coefficient thresholds stored in the threshold memory to obtain thresholded transformation coefficients;
Step 5: if the motion vector's magnitude is not zero or if any of the thresholded transformation coefficients is/are not zero, the event generation module 45 produces event data containing the motion vector and the non-zero thresholded transformation coefficient(s);
Step 6: if the event generation module 45 produces the event data, the update module 46:
   i) locate the matching block according to the motion vector;
   ii) perform an inverse linear transformation based on the non-zero thresholded transformation coefficients to obtain a reconstructed block vector, i.e. a reconstructed residual difference;
   iv) update the previous pixel values of the pixel block in the anchor memory 3 with the pixel-wise sum of the previous pixel values of the matching block and the reconstructed block vector.

In the following, an example pixel block is used to further elaborate the processing iteration. At step 1, the pixel values of the example pixel block are derived as shown below in an array format of eight columns by eight rows: $\begin{matrix}Pixel values = \\ array \left(\left[\begin{matrix}\left[55, 59, 67, 63, 55, 56 ,55 57\right] , \\ \left[61, 60, 61, 54, 58, 55, 63, 56\right] , \\ \left[56 ,57, 56, 52, 61, 60, 52, 55\right] , \\ \left[45, 48, 49, 57, 53, 53, 56, 56\right] , \\ \left[45, 54, 57, 61, 47, 55, 48, 49\right] , \\ \left[49, 48, 59, 55, 55, 49, 55, 50\right] , \\ \left[60, 60, 53, 46, 49, 46, 51, 49\right] , \\ \left[63, 50, 53, 54, 52, 49, 49, 50\right]\end{matrix}\right]\right)\end{matrix}$

At step 2, the matching block of the example pixel block is found, comprising the previous pixel values as shown below in an array format of eight columns by eight rows: $\begin{matrix}Previous pixel values \left(matching block\right) = \\ array \left(\left[\begin{matrix}\left[64, 64, 64, 70, 70, 78, 78, 71\right] , \\ \left[64, 64, 64, 70, 70, 78, 78, 71\right] , \\ \left[68, 76, 76, 72, 72, 72, 72, 72\right] , \\ \left[68, 76, 76, 72, 72, 72, 72, 72\right] , \\ \left[68, 76, 76, 72, 72, 72, 72, 72\right] , \\ \left[68, 76, 76, 72, 72, 72, 72, 72\right] , \\ \left[76, 68, 68, 72, 72, 72, 72, 74\right] , \\ \left[76, 68, 68, 72, 72, 72, 72, 74\right]\end{matrix}\right]\right)\end{matrix}$

The motion vector is calculated to be (-6, 7), and the block vector is calculated as shown below in an array format of eight columns by eight rows: $\begin{matrix}Block vector = \\ array \left(\left[\begin{matrix}\left[-9, -5, 3, -7, -15, -22, -23, -14\right] , \\ \left[-3, -4, -3, -16, -12, -23, -15, -15\right] , \\ \left[-12, -19, -20, -20, -11, -12, -20, -17\right] , \\ \left[-23, -28, -27, -15, -19, -19, -16, -16\right] , \\ \left[-23, -22, -19, -11, -25, -17, -24, -23\right] , \\ \left[-19, -28, -17, -17, -17, -23, -17, -22\right] , \\ \left[-16, -8, -15, -26, -23, -26, -21, -25\right] , \\ \left[-13, -18, -15, -18, -20, -23, -23, -24\right]\end{matrix}\right]\right)\end{matrix}$

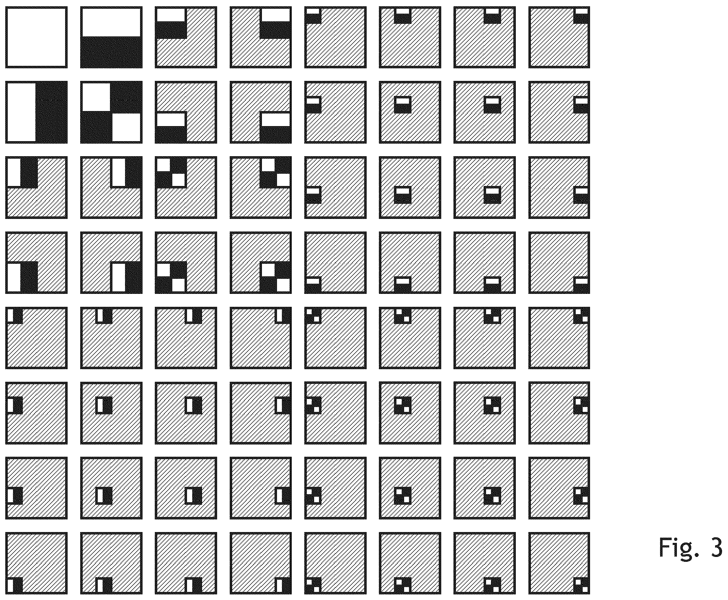

Fig. 3 shows basis vectors of the Haar transform in a qualitative rather than quantitative fashion. There are sixty-four basis vectors. Each basis vector can be visualized as a basis image consisting of eight rows by eight columns of pixels, where each pixel represents an element of the basis vector. A white pixel represents an element with a highest value within the basis vector. A black pixel represents an element a lowest value within the basis vector. And a hatched pixel represents an element with a medium value within the basis vector.

At step 3, the Haar transform result in the transformation coefficients as shown below in an array format of eight columns by eight rows: $\begin{matrix}Transformation coefficients = \\ array \left(\left[\begin{matrix}\left[-17, 3, 8, -1, -2, 4, 0, -2\right] , \\ \left[2, 0, -2, 1, 5, 1, 4, -1\right] , \\ \left[0, 0, 0, -1, 1, 1, 0, -2\right] , \\ \left[-1, 0, -3, 0, 2, -2, -1, 0\right] , \\ \left[-1, 6, 5, -2, -1, -1, -1, -2\right] , \\ \left[3, -3, 0, -1, 1, 1, 3, 0, -1\right] , \\ \left[2, -2, 0, 1, -2, -2, -3, -1\right] , \\ \left[-1, 4, 2, 1, -3, 2, 0, 1\right]\end{matrix}\right]\right)\end{matrix}$

The coefficient thresholds assigned to the transformation coefficients are listed below in an array format of eight columns by eight rows, such that each coefficient threshold is assigned to the transformation coefficient in the same relative position in the array: $\begin{matrix}Coefficient thresholds = \\ array \left(\left[\begin{matrix}\left[1, 2, 5, 5, 9, 9, 9, 9\right] , \\ \left[2, 3, 5, 5, 9, 9, 9, 9\right] , \\ \left[5, 5, 8, 8, 9, 9, 9, 9\right] , \\ \left[5, 5, 8, 8, 9, 9, 9, 9\right] , \\ \left[9, 9, 9, 9, 15, 15, 15, 15\right] , \\ \left[9, 9, 9, 9, 15, 15, 15, 15\right] , \\ \left[9, 9, 9, 9, 15, 15, 15, 15\right] , \\ \left[9, 9, 9, 9, 15, 15, 15, 15\right]\end{matrix}\right]\right)\end{matrix}$

At step 4, the thresholding operation result in the thresholded transformation coefficients as shown below in an array format of eight columns by eight rows: $\begin{matrix}Threshold transformation coefficients = \\ array \left(\left[\begin{matrix}\left[-17, 3, 8, 0, 0, 0, 0, 0,\right] , \\ \left[2, 0, 0, 0, 0, 0, 0, 0,\right] , \\ \left[0, 0, 0, 0, 0, 0, 0, 0,\right] , \\ \left[0, 0, 0, 0, 0, 0, 0, 0,\right] , \\ \left[0, 0, 0, 0, 0, 0, 0, 0,\right] , \\ \left[0, 0, 0, 0, 0, 0, 0, 0,\right] , \\ \left[0, 0, 0, 0, 0, 0, 0, 0,\right] , \\ \left[0, 0, 0, 0, 0, 0, 0, 0,\right]\end{matrix}\right]\right)\end{matrix}$

Therefore, at step 5, there are only four non-zero thresholded transformation coefficients among all the thresholded transformation coefficients.

In step 6, the four non-zero thresholded transformation coefficients result in the reconstructed block vector as shown below in an array format of eight columns by eight rows: $\begin{matrix}Reconstructed block vector = \\ array \left(\left[\begin{matrix}\left[-4, -4, -4, -4, -16, -16, -16, -16\right] , \\ \left[-4, -4, -4, -4, -16, -16, -16, -16\right] , \\ \left[-20, -20, -20, -20, -16, -16, -16, -16\right] , \\ \left[-20, -20, -20, -20, -16, -16, -16, -16\right] , \\ \left[-18, -18, -18, -18, -22, -22, -22, -22\right] , \\ \left[-18, -18, -18, -18, -22, -22, -22, -22\right] , \\ \left[-18, -18, -18, -18, -22, -22, -22, -22\right] , \\ \left[-18, -18, -18, -18, -22, -22, -22, -22\right]\end{matrix}\right]\right)\end{matrix}$

Lastly, the pixel-wise sum of the previous pixel values of the matching block and the reconstructed block vector result in the updated previous pixel values of the pixel block as shown below in an array format of eight columns by eight rows: $\begin{matrix}Updated previous pixel values = \\ array \left(\left[\begin{matrix}\left[60, 60, 60, 66, 54, 62, 62, 55\right] , \\ \left[60, 60, 60, 66, 54, 62, 62, 55\right] \\ \left[48, 56, 56, 52, 56, 56, 56, 56\right] , \\ \left[48, 56, 56, 52, 56, 56, 56, 56\right] , \\ \left[50, 58, 58, 54, 50, 50, 50, 50\right] , \\ \left[50, 58, 58, 54, 50, 50, 50, 50\right] , \\ \left[58, 50, 50, 54, 50, 50, 50, 52\right] , \\ \left[58, 50, 50, 54, 50, 50, 50, 52\right]\end{matrix}\right]\right)\end{matrix}$

### Reference Numerals:

- 10: pixel array

- 3: anchor memory

- 4: readout processor, processing cores
- 41: pixel value module
- 42: vector module
- 43: transformation module
- 44: thresholding module
- 45: event generation module
- 46: update module

- 56: memory configurator

- 61: external computer
- 62: external non-volatile storage

- 7: threshold memory

## Claims

1. Event sensor comprising a pixel array (10) of pixels and configured to produce a data stream of event data in reaction to light incident on the pixel array (10), wherein the pixels of the pixel array (10) are divided into pixel blocks, each comprising two or more pixels of the pixel array (10), the event sensor comprising:
- for each pixel of the pixel array (10) at least one photodetector (1) configured to produce a detector signal in reaction to light incident on the pixel;
- for each pixel or a group of the pixels a signal converter (2) connected to the photodetector (1) and configured to sample the detector signal and produce a sample value dependent on the detector signal sampled at sampling intervals;
- a readout processor (4) connected to the signal converter (2) and configured to receive the sample value from the signal converter and perform a processing iteration on the pixel block to produce the event data, the readout processor (4) comprising:
a) a pixel value module (41) configured to derive for each pixel of the pixel block a pixel value based on the sample value;
b) a vector module (42) configured to determine a block vector related to the pixel block, comprising a tuple of elements based on the pixel values of the pixel block;
c) a transformation module (43) configured to perform a linear transformation on the block vector to obtain transformation coefficients;
d) a thresholding module (44) configured to perform a thresholding operation on the transformation coefficients using one or more coefficient threshold(s) to obtain thresholded transformation coefficients;
e) an event generation module (45) configured to produce the event data based on the thresholded transformation coefficients.

2. Event sensor according to claim 1, wherein the vector module (42) is configured to perform a block-matching algorithm on the pixel block to find a matching block and calculate the block vector as a residual difference between the pixel block and the matching block, comprising pixel-wise differences between the pixel values of the pixel block and corresponding previous pixel values of the matching block.

3. Event sensor according to claim 1, wherein the vector module (42) is configured to determine the block vector as a temporal difference of the pixel block, the temporal difference comprising pixel-wise differences between the pixel values and previous pixel values of the pixel block.

4. Event sensor according to claim 1, wherein the vector module (42) is configured to determine the block vector as directly comprising the pixel values of the pixel block.

5. Event sensor according to one of the previous claims, wherein the thresholding module (44) is configured to threshold a transformation coefficient representing a lower spatial frequency component using a lower coefficient threshold than a transformation coefficient representing a higher spatial frequency component.

6. Event sensor according to claim 2, wherein the thresholding module (44) is configured to modulate the thresholding operation based on an average of the pixel values of the pixel block, an average of the previous pixel values of the matching block, or an average of both the pixel values of the pixel block and the previous pixel values of the matching block.

7. Event sensor according to claim 3 or 4, wherein the thresholding module (44) is configured to modulate the thresholding operation based on an average of the pixel values of the pixel block, an average of the previous pixel values of the pixel block, or an average of both the pixel values and the previous pixel values of the pixel block.

8. Event sensor according to claim 2 or 3, further comprising an anchor memory (3) connected to the readout processor (4) and configured to store, for each pixel of the pixel array (10), the previous pixel value.

9. Event sensor according to claim 5, further comprising a threshold memory connected to the readout processor (4) and configured to store a predetermined coefficient threshold assigned to each transformation coefficient and/or each group of transformation coefficients.

10. Event sensor according to one of the previous claims, wherein the linear transformation is Fourier-related.

11. Event sensor according to one of the claims 1 to 9, wherein the linear transformation is wavelet-related.

12. Event sensor according to claim 8, wherein the readout processor (4) further comprises an update module (46) configured to, if the event generation module (45) produces the event data from the pixel block, update the previous pixel values of the pixel block stored in the anchor memory (3) based on the event data.

13. Event sensor according to one of the previous claims, wherein the readout processor (4) is configured to, upon receiving all the sample values of the pixel block, determine whether to perform the processing iteration on the pixel block or not based on (a) comparison result(s) of comparing an average, a minimum and/or a maximum of the sample values of the pixel block against an under-exposure threshold and/or an over-exposure threshold.
